Europäisches Patentamt

European Patent Office

Office européen des brevets

(19)

(11) EP 0 721 290 A1

(12) DEMANDE DE BREVET EUROPEEN

(43) Date de publication:
10.07.1996 Bulletin 1996/28

(51) Int. Cl.⁶: H04Q 7/30, H04Q 7/36,
H04B 7/26

(21) Numéro de dépôt: 96400005.3

(22) Date de dépôt: 02.01.1996

(84) Etats contractants désignés:
AT BE CH DE DK ES GB IT LI NL SE

(30) Priorité: 02.01.1995 FR 9500009

(71) Demandeur: ALCATEL CIT
F-75008 Paris (FR)

(72) Inventeur: Dupuy, Pierre
F-75017 Paris (FR)

(74) Mandataire: El Manouni, Josiane
SOSPI
14-16, rue de la Baume
75008 Paris (FR)

(54) Procédé et dispositif pour allouer des voies de communication à des mobiles proches et lointains dans un système de radiocommunication cellulaire AMRT, notamment un système GSM

(57) La station de base exécute les étapes suivantes :

- analyse des trames montantes reçues : a) suivant une première fenêtre temporelle (Fi) décalée d'un premier décalage de garde nominal (3.TS) correspondant à la distance minimale des mobiles proches et b) suivant une seconde fenêtre temporelle (F'i) décalée d'un second décalage de valeur (3.TS + Δ'T) correspondant à la distance minimale des mobiles lointains,
- recherche, dans chacune de ces fenêtres temporelles, de pics d'autocorrélation pour des intervalles temporels de demande d'allocation de canal, de manière à : a) d'une part, reconnaître un mobile demandant l'allocation d'un canal et b) d'autre part, déterminer le caractère proche ou lointain du mobile ainsi reconnu, et
- allocation dans la bande de base d'un intervalle temporel libre (Ti) à chaque mobile ainsi reconnu, en prévoyant, pour les mobile proches, au moins un intervalle temporel de décalage (TS) par rapport à la trame montante initialement émise.

**Description**

La présente concerne les systèmes cellulaires de radiocommunication du type à accès multiple à répartition dans le temps (AMRT ou TDMA, Time-Division Multiple Access).

Le système européen GSM est un tel système AMRT typique, et l'on décrira l'invention essentiellement dans le cadre de ce système, pour lequel on pourra se référer pour de plus amples détails à l'ouvrage "The GSM system", écrit et publié par Michel MOULY et Marie-Bernadette PAUTET, Paris, 1992. L'invention n'est toutefois pas limitée à ce cas particulier et s'applique aussi bien, comme on le comprendra, à n'importe quel système AMRT.

L'invention vise le problème particulier constituant à procurer une couverture satisfaisante dans des zones étendues, par exemple des zones rurales ou côtières, typiquement avec des rayons de couverture supérieurs à 35 km (cette valeur, qui n'a aucun caractère limitatif, étant la valeur nominale de la dimension maximale d'une cellule GSM susceptible d'être couverte sans qu'il soit nécessaire d'utiliser des protocoles particuliers).

Dans la suite, on attribuera le qualificatif "proche" aux mobiles situés en deçà de ce rayon nominal de cellule (donc à une distance comprise entre 0 et 35 km de la station de base) et "lointain" aux mobiles situés au-delà de cette limite, c'est-à-dire au-delà de 35 km, typiquement dans un rayon compris entre 35 et 70 km.

Un premier procédé pour échanger des communications avec des mobiles lointains, qui est exposé dans l'ouvrage "The GSM system" précité, page 347, consiste à réserver deux intervalles temporels (TS, Time-Slot, en terminologie GSM) par mobile au lieu d'un, de manière à disposer d'un temps de garde double, suffisant pour couvrir des distances entre mobile et station de base (BTS, Base Transceiver Station, en terminologie GSM) très supérieures à 35 km.

Cette technique présente l'inconvénient de diviser par deux le nombre de mobiles qu'il est possible de gérer simultanément, et nécessite de rechercher la position du signal de demande d'accès au réseau sur la durée de deux intervalles temporels au lieu d'un, ce qui augmente d'autant la durée de l'étape d'échantillonnage et de recherche du pic principal de corrélation.

Une autre technique, exposée dans le FR-A-2 702 320 au nom de la demanderesse, consiste à utiliser deux stations de base, l'une pour couvrir la zone 0-35 km et l'autre pour couvrir la zone 35-70 km. Cette technique est efficace et permet de pallier les inconvénients de la première technique. Toutefois, elle se traduit par un dédoublement du nombre d'émetteurs et de canaux de diffusion générale (BCCH, Broadcast Control CHannel, en terminologie GSM), même si le trafic ne le justifie pas, ce qui grève d'autant le coût de l'installation.

Le EP-0 564 429 vise également le problème de la couverture à grande distance dans les réseaux cellulaires, en proposant de faire fonctionner une même station de base aussi bien dans le domaine proche que dans le domaine lointain. Toutefois, ce document ne donne aucun enseignement sur la manière d'allouer les intervalles temporels à des mobiles dont on ne sait pas a priori s'ils sont proches ou lointains.

L'un des buts de la présente invention est, précisément, de proposer un procédé permettant de réaliser l'allocation des intervalles temporels de trafic à des mobiles indifféremment proches ou lointains, qui pallie les inconvénients des techniques précitées connues, en particulier en conservant le même nombre d'intervalles temporels par mobile dans une trame donnée, sans dédoublement du nombre de stations de base et de canaux de diffusion générale.

On verra par ailleurs que le procédé de l'invention permet à un mobile, qu'il soit proche ou lointain, d'être toujours reconnu dès sa première tentative d'accès au réseau, ce qui augmente encore l'efficacité du système et évite de pénaliser une catégorie de mobiles par rapport à une autre.

A cet effet, le procédé de l'invention, qui est, comme on l'a indiqué, un procédé dans lequel une station de base communique avec les mobiles par une structure de trame descendante et les mobiles communiquent avec la station de base par une structure de trame montante, les mobiles étant répartis en mobiles proches et en mobiles lointains par rapport à la station de base, est caractérisé en ce que la station de base exécute les étapes suivantes : réception des trames montantes ; analyse de ces trames montantes : a) suivant, d'une part, une première fenêtre temporelle décalée d'un premier décalage par rapport aux trames descendantes correspondantes, ce premier décalage étant un décalage de garde nominal correspondant à la distance minimale des mobiles proches, et b) suivant, d'autre part, une seconde fenêtre temporelle décalée d'un second décalage par rapport au trames descendantes correspondantes, ce second décalage étant un décalage de valeur correspondant à la distance minimale des mobiles lointains ; recherche, dans chacune de ces fenêtres temporelles, de pics d'autocorrélation pour des intervalles temporels de demande d'allocation de canal, de manière à : a) d'une part, reconnaître un mobile demandant l'allocation d'un canal et b) d'autre part, déterminer le caractère proche ou lointain du mobile ainsi reconnu ; et allocation dans la bande de base d'un intervalle temporel libre à chaque mobile ainsi reconnu, en prévoyant, pour les mobile proches, au moins un intervalle temporel de décalage par rapport à la trame montante initialement émise.

De préférence, dans l'étape d'allocation, on alloue préférentiellement les intervalles temporels de faible rang aux mobiles lointains et les intervalles temporels de rang plus élevé aux mobiles proches, de manière à regrouper mobiles proches et mobiles lointains sur des séries respectives d'intervalles temporels successifs.

L'invention couvre également une station de base mettant en oeuvre un tel procédé.

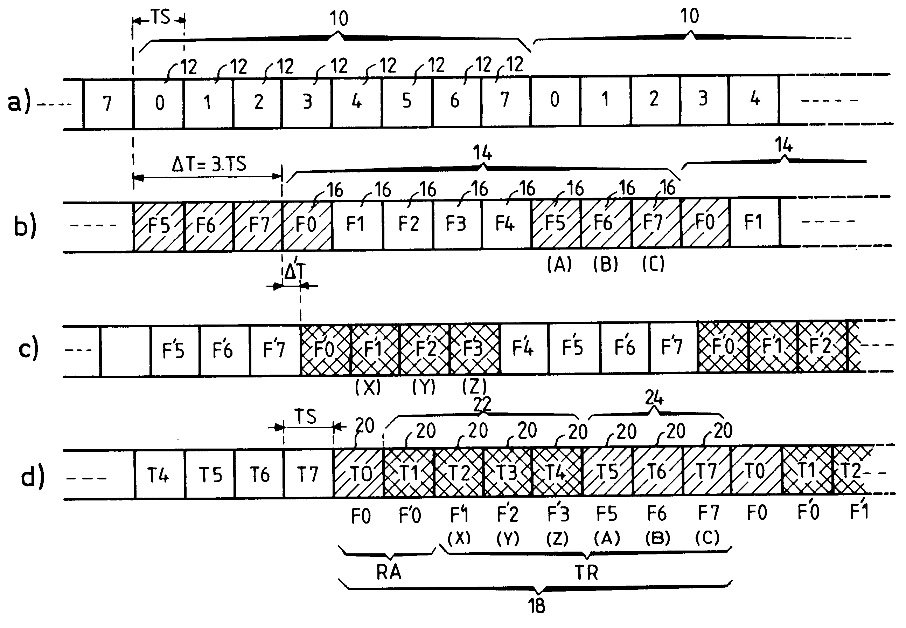

D'autres caractéristiques et avantages de l'invention apparaîtront à la lecture de la description détaillée ci-dessous d'un exemple de réalisation, faite en référence à la figure unique annexée, qui représente un chronogramme des diverses structures temporelles impliquées dans la mise en oeuvre du procédé de l'invention.

Sur la figure, le chronogramme a représente la structure temporelle de base d'une trame descendante dans un système GSM : une trame 10 comporte une pluralité d'intervalles temporels 12, désignés 0 à 7 et véhiculant les informations depuis la station de base vers les mobiles.

Le chronogramme b représente la structure des trames montantes, c'est-à-dire renvoyées des mobiles vers la station de base : chacune de ces trames 14 comporte également huit intervalles temporels 16, semblables aux intervalles temporels 12 des trames descendantes 10, mais décalés d'un intervalle de temps $\Delta T = 3.TS$ , TS étant la durée d'un intervalle temporel.

Pour plus de détails sur la structure et le rôle de ces trames descendantes et montantes, on pourra se référer à l'ouvrage précité "The GSM system".

Dans un système GSM conventionnel, c'est-à-dire fonctionnant uniquement avec des mobiles proches, la station de base reçoit un flux continu de données constitué de trames dont chaque intervalle temporel peut correspondre à une communication montante en provenance d'un mobile.

Lorsqu'un mobile souhaite se faire allouer un intervalle temporel de trafic, il émet une trame comportant une demande d'allocation de canal (RA, Random Access, en terminologie GSM). La station de base doit, d'une part, reconnaître un tel type de message et, d'autre part, déterminer le retard de propagation (durée du trajet aller-retour entre la station de base et le mobile) afin de pouvoir en tenir compte pour le séquencement temporel des informations échangées avec le mobile.

Cette recherche se fait par un procédé d'autocorrélation sur la succession de bits reçus, cette autocorrélation étant opérée entre, d'une part, le signal reçu et, d'autre part, un signal de référence correspondant à une partie connue du signal reçu et décalé à chaque fois de la durée d'un bit supplémentaire, dans la limite de 63 bits de décalage (63 bits correspondant à une distance entre station de base et mobile de 35 km).

Le premier pic de corrélation, qui est le plus souvent le pic principal, correspond au temps minimum de transmission du signal radioélectrique, les autres pics éventuellement détectés correspondant à des trajets secondaires, par exemple après réflexion sur des obstacles naturels.

Comme on le comprend, cette technique n'est applicable que dans le cas de mobiles proches.

Dans le cas des mobiles lointains, il est nécessaire d'utiliser des techniques spéciales qui, jusqu'à présent, n'ont pas permis d'aboutir à des résultats satisfaisants en termes d'efficacité et/ou de coût d'installation.

L'invention propose, pour pallier les limitations rencontrées jusqu'à présent, de réaliser simultanément une double analyse des trames montantes reçues, l'une de la manière classique et l'autre avec un décalage temporel correspondant sensiblement à une distance de 35 km, de confronter les résultats de deux analyses et d'allouer les intervalles temporels de trafic aux mobiles proches ou lointains en fonction des résultats de ces analyses.

Plus précisément, on a illustré sur le chronogramme de la ligne b de la figure la première de ces analyses, qui est l'analyse classique réalisée par tout système GSM, et sur le chronogramme de la ligne c l'analyse décalée simultanée, combinée à la précédente de façon caractéristique de l'invention.

Pour une meilleure compréhension des figures, dans l'exemple illustré, on a représenté avec des hachures simples les intervalles temporels correspondant à des mobiles proches, avec des hachures croisées les intervalles temporels correspondant à des mobiles lointains et par l'absence de hachure les intervalles temporels non utilisés.

La première analyse, non décalée, ne prend en compte que les mobiles proches. Dans l'exemple illustré, on est en présence de quatre mobiles proches, qui ont été détectés dans les fenêtres d'analyse F0, F5, F6 et F7 (F0 étant le canal de signalisation commun aux trois canaux de trafic F5, F6 et F7, correspondant aux trois mobiles proches A, B et C).

Sur la ligne c, quatre mobiles lointains vont être identifiés, par une analyse effectuée dans des fenêtres décalées d'un intervalle de temps $\Delta'T$, de durée correspondant à une distance entre mobile et base de 35 km, soit 63 bits : du fait de ce décalage, les mobiles proches, dont le temps de propagation est faible, ne seront pas détectés alors que les mobiles lointains le seront, par exemple les trois mobiles lointains X, Y et Z détectés dans les fenêtres F'1, F'2 et F'3, la fenêtre F'0 correspondant à l'intervalle temporel de signalisation.

L'étape suivante consiste, une fois effectuée l'analyse des trames montantes, à allouer les intervalles temporels sur la trame descendante, en recombinant sur cette même bande de base les données correspondant aux fenêtres F0, F1, F2, ... et celles correspondant aux fenêtres décalées F'0, F'1, F'2, ...

La combinaison correspondante est illustrée sur la ligne d de la figure : sur une trame descendante 18, composée de huit intervalles temporels 20 référencés T0, T1, ... T7, décalés de la valeur d'un intervalle temporel (décalage TS) par rapport aux trames montantes, on trouve successivement les intervalles temporels suivants :

- signalisation F0 des mobiles proches (T0),
- signalisation F'0 des mobiles lointains (T1),
- trafic F'1, F'2 et F'3 des mobiles lointains X, Y et Z (T2, T3, T4),
- trafic F5, F6, F7 des mobiles proches A, B et C (T5, T6, T7)

De préférence (mais cette caractéristique n'est pas nécessaire) on imbrique les intervalles temporels correspondant à des mobiles lointains et à des mobiles proches de manière à regrouper entre eux les différents mobiles d'une même catégorie sur une même série d'intervalles temporels successifs, comme indiqué en 22 pour les mobiles lointains et en 24 pour les mobiles proches, de manière à permettre une optimisation du système.

On voit ainsi que l'on peut gérer sur une même bande de base le trafic simultané de six mobiles indifféremment proches ou lointains, avec donc une différence d'efficacité très minime (six mobiles simultanés au lieu de sept) par rapport à un système GSM classique ne gérant que des mobiles proches.

L'invention permet donc de doubler le rayon effectif d'une cellule - donc d'en quadrupler la superficie -, en ne limitant que de façon très minime les performances du système et avec un très faible surcoût en matériel.

En particulier, comme on peut le voir, le procédé de l'invention, qui est mis en oeuvre en aval des circuits de réception, ne nécessite aucune modification des modulateurs de la station de base, la seule modification se situant, dans le logiciel d'analyse, au niveau de la fenêtre de saisie de l'échantillonnage, donc sans augmenter de façon sensible la complexité du système, notamment du matériel de réception de la station de base.

## Revendications

1. Un procédé pour allouer en bande de base des intervalles temporels au sein de trames de communication avec des mobiles dans un système de radiocommunication cellulaire du type à accès multiple à répartition dans le temps, notamment un système GSM, où une station de base communique avec les mobiles par une structure de trame descendante et les mobiles communiquent avec la station de base par une structure de trame montante, système dans lequel les mobiles sont répartis en mobiles proches et en mobiles lointains par rapport à la station de base,

   procédé caractérisé en ce que la station de base exécute les étapes suivantes :

   - réception des trames montantes,
   - analyse de ces trames montantes :

      a) suivant, d'une part, une première fenêtre temporelle (Fi) décalée d'un premier décalage par rapport aux trames descendantes correspondantes, ce premier décalage étant un décalage de garde nominal de valeur (3.TS) correspondant à la distance minimale des mobiles proches, et
      b) suivant, d'autre part, une seconde fenêtre temporelle (F'i) décalée d'un second décalage par rapport au trames descendantes correspondantes, ce second décalage étant un décalage de valeur (3.TS + $\Delta$'T) correspondant à la distance minimale des mobiles lointains,

   - recherche, dans chacune de ces fenêtres temporelles, de pics d'autocorrélation pour des intervalles temporels de demande d'allocation de canal, de manière à :

      a) d'une part, reconnaître un mobile demandant l'allocation d'un canal et
      b) d'autre part, déterminer le caractère proche ou lointain du mobile ainsi reconnu, et

   - allocation dans la bande de base d'un intervalle temporel libre (Ti) à chaque mobile ainsi reconnu, en prévoyant, pour les mobile proches, au moins un intervalle temporel de décalage (TS) par rapport à la trame montante initialement émise.

2. Le procédé de la revendication 1, dans lequel, dans l'étape d'allocation, on alloue préférentiellement les intervalles temporels de faible rang (T1, T2, T3, T4) aux mobiles lointains et les intervalles temporels de rang plus élevé (T0, T7, T6, T5) aux mobiles proches, de manière à regrouper mobiles proches et mobiles lointains sur des séries respectives d'intervalles temporels successifs.

3. Une station de base pour un système de radiocommunication cellulaire du type à accès multiple à répartition dans le temps, notamment un système GSM, système dans lequel la station de base communique avec les mobiles par une structure de trame descendante et les mobiles communiquent avec la station de base par une structure de trame montante, et dans lequel les mobiles sont répartis en mobiles proches et en mobiles lointains par rapport à la station de base, la station de base comportant des moyens d'allocation, pour allouer en bande de base des intervalles temporels au sein de trames de communication avec des mobiles,

   station de base caractérisée en ce que les moyens d'allocation comprennent :

   - des moyens de réception des trames montantes,
   - des moyens d'analyse de ces trames montantes :

      a) suivant, d'une part, une première fenêtre temporelle (Fi) décalée d'un premier décalage par rapport aux trames descendantes correspondantes, ce premier décalage étant un décalage de garde nominal de valeur (3.TS) correspondant à la distance minimale des mobiles proches, et
      b) suivant, d'autre part, une seconde fenêtre temporelle (F'i) décalée d'un second décalage par rapport au trames descendantes correspondantes, ce second décalage étant un décalage de valeur (3.TS + Δ'T) correspondant à la distance minimale des mobiles lointains,

- des moyens de recherche, dans chacune de ces fenêtres temporelles, de pics d'autocorrélation pour des intervalles temporels de demande d'allocation de canal, de manière à :

    a) d'une part, reconnaître un mobile demandant l'allocation d'un canal et
    b) d'autre part, déterminer le caractère proche ou lointain du mobile ainsi reconnu, et

- des moyens pour allouer dans la bande de base un intervalle temporel libre (Ti) à chaque mobile ainsi reconnu, en prévoyant, pour les mobile proches, au moins un intervalle temporel de décalage (TS) par rapport à la trame montante initialement émise.

4. La station de base de la revendication 3, dans laquelle les moyens d'allocation allouent préférentiellement les intervalles temporels de faible rang (T1, T2, T3, T4) aux mobiles lointains et les intervalles temporels de rang plus élevé (T0, T7, T6, T5) aux mobiles proches, de manière à regrouper mobiles proches et mobiles lointains sur des séries respectives d'intervalles temporels successifs.

**Office européen des brevets**

# RAPPORT DE RECHERCHE EUROPEENNE

Numero de la demande

EP 96 40 0005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP-A-0 614 290 (ALCATEL RADIOTELEPHONE) 7 Septembre 1994 <br> * page 4, ligne 47 - page 6, ligne 10; revendications 1,2,5,6,14,26,29 * <br> --- | 1,3 | H04Q7/30 <br> H04Q7/36 <br> H04B7/26 |
| D,A | EP-A-0 564 429 (ERICSSON TELEFON AB L M) 6 Octobre 1993 <br> * le document en entier * <br> --- | 1,2 | |
| A | EP-A-0 295 227 (ERICSSON TELEFON AB L M) 14 Décembre 1988 <br> * le document en entier * <br> --- | 1,2 | |
| A | EP-A-0 064 686 (INT STANDARD ELECTRIC CORP ;STANDARD ELEKTRIK LORENZ AG (DE)) 17 Novembre 1982 <br> * revendications 1,4,5,7,14 * <br> --- | 1,2 | |
| P,A | EP-A-0 662 776 (SEL ALCATEL AG) 12 Juillet 1995 <br> * le document en entier * <br> ----- | 1-4 | |

**DOMAINES TECHNIQUES RECHERCHES (Int.Cl.6)**

H04Q
H04B

Le présent rapport a été établi pour toutes les revendications

| Lieu de la recherche | Date d'achèvement de la recherche | Examinateur |
|---|---|---|
| LA HAYE | 2 Mai 1996 | Janyszek, J-M |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P04C02)